# EUROPÄISCHE PATENTANMELDUNG

(11) **EP 1 189 058 A2**
(43) Veröffentlichungstag der Anmeldung: **20.03.2002**
(21) Anmeldenummer: 01119890.0
(22) Anmeldetag: 17.08.2001
(51) Int. Cl.: G01N 27/90

(54) **Verfahren und Vorrichtung zur Prüfung eines Werkstücks mittels Wirbelströmen**

(30) Priorität: 15.09.2000 DE 10045715
(71) Anmelder: Prüftechnik Dieter Busch AG, 85737 Ismaning (DE)
(72) Erfinder: Hölzl, Roland, 81369 München (DE)

(57) **Zusammenfassung**

Die Erfindung betrifft ein Verfahren zur Prüfung eines Werkstücks mittels Wirbelströmen, die von einer Erregerspule in dem Werkstück induziert werden und aus denen mittels eines Messsensors ein Messsignal gewonnen wird, wobei ein für einen Werkstückfehler repräsentatives Mustersignal erzeugt wird, eine Korrelationsfunktion des von dem Sensor erfassten Messsignals mit dem Mustersignal ermittelt wird, und die Korrelationsfunktion ausgewertet wird, um einen Fehler in dem Werkstück zu erkennen. Ferner betrifft die Erfindung eine Vorrichtung zur Ausführung des Verfahrens.

## Beschreibung

Die vorliegende Erfindung betrifft ein Verfahren und eine Vorrichtung zur Prüfung eines Werkstücks mittels Wirbelströmen, die von einer Erregerspule in dem Werkstück induziert werden und aus denen mittels eines Messsensors ein Messsignal gewonnen wird.

Bei der Prüfung eines elektrisch leitenden Werkstücks mittels Wirbelströmen wird die Tatsache ausgenutzt, dass Materialfehler in dem Werkstück bzw. Prüfling (beispielsweise Risse, Lunker, Oberflächenschäden, schlechte Schweißnähte usw.) die Ausbreitung von Wirbelströmen, welche mittels der Erregerspule induziert werden, behindern, was sich auf das wiederum von den Wirbelströmen erzeugte elektromagnetische Feld auswirkt. Das von den Wirbelströmen erzeugte elektromagnetische Feld wird dabei mittels eines Sensors erfasst, bei dem es sich um die Erregerspule selbst oder mindestens eine separate Messspule handeln kann. Falls nur eine einzige separate Messspule vorgesehen ist, wird diese Anordnung "Absolutspule" genannt. Zwei oder mehr Messspulen können subtraktiv geschaltet werden, was als "Differenzspule" bezeichnet wird und das Ausschalten beispielsweise einer Temperaturdrift ermöglicht. Ein die Wirbelströme beinflussender Materialfehler kann somit als Impedanzänderung der mit dem Prüfling gekoppelten Messspule aufgefasst werden, wobei das Fehlersignal üblicherweise als Vektorgröße (Amplitude und Phasenwinkel) in der Impedanzebene der Messspule dargestellt wird. Die Phasenverschiebung der Wirbelströme bezüglich der Erregerspannung hängt u.a. von der Tiefe im Material ab. Die Erregerfrequenz bestimmt die Eindringtiefe sowie die Phasenverschiebung der Wirbelströme in einer bestimmten Materialtiefe.

Beispiele zur phasenselektiven Auswertung von Wirbelstrommessungen zur Materialprüfung sind beispielsweise in EP 0 282 930, US 4 646 013, US 4 355 281 sowie US 4 853 634 zu finden. Aus US 5 371 462 ist es bekannt, Messsignale, die nicht von Fehlern, sondern von Geometrieeffekten des Prüflings, wie beispielsweise Kanten oder Rändern, herrühren, dadurch zu eliminieren, dass durch Abtasten eines fehlerlosen, zum Prüfling identischen Werkstücks ein Referenz-Hintergrundsignal erzeugt wird, welches nach der eigentlichen Messung des Prüflings von dem für den Prüfling erhaltenen Messsignal abgezogen wird.

Grundsätzlich kann die Auswertung von Wirbelstrommesssignalen durch Rauschsignale (darunter sind hier allgemein Störsignale aller Art zu verstehen, die auch periodisch sein können) verhindert oder erschwert werden, die von mechanischen oder elektromagnetischen Störungen (z.B. durch eine Schweißmaschine in der Linie) erzeugt werden können. Auch kann die Oberfläche des Prüflings zu einen erhöhten Grundrauschen führen, wenn es sich beispielsweise um eine verzinkte Oberfläche handelt. In der Praxis wird versucht, solchen Schwierigkeiten beispielsweise durch die Modifikation der Erregerfrequenz, Multifrequenzverfahren oder Modifikationen der Filter zu begegnen. Es zeigt sich jedoch, dass die bisherigen Mess- und Bewertungsverfahren nicht immer zu hinreichend sicheren und reproduzierbaren Ergebnissen führen. Insbesondere wäre es wünschenswert, Fehlersignale auch in der Nähe bzw. unterhalb des Rauschpegels zu erkennen.

Es ist Aufgabe der vorliegenden Erfindung, ein Verfahren und eine Vorrichtung zur Prüfung eines Werkstücks mittels Wirbelströmen zu schaffen, bei welchen Fehler mit größerer Zuverlässigkeit und Genauigkeit als bei bekannten Verfahren erkannt werden können.

Diese Aufgabe wird erfindungsgemäß durch ein Verfahren gemäß Anspruch 1 sowie eine Vorrichtung gemäß Anspruch 23 gelöst. Bei dieser Lösung ist vorteilhaft, dass dadurch, dass statt des eigentlichen Messsignals die Korrelation des Messsignals mit einem für einen Werkstückfehler typischen bzw. repräsentativen Mustersignal ausgewertet wird, die Zuverlässigkeit der Fehlererkennung vor allem bei stark verrauschten Messsignalen deutlich erhöht werden kann.

Bevorzugte Ausgestaltungen der Erfindung ergeben sich aus den Unteransprüchen.

Im folgenden wird die Erfindung anhand der beigefügten Zeichnungen beispielhaft näher erläutert, wobei:
- Fign. 1A bis 1C: beispielhaft ein Mustersignal, ein Messsignal bzw. deren Kreuzkorrelation zeigen;
- Fign. 2A bis 2C: den Fign. 1A bis 1C entsprechen, wobei jedoch die entsprechenden Betragssignale dargestellt sind und das Messsignal gemäß Fig. 2B mit Quadratur gewichtet wurde;
- Fig. 3: schematisch eine erfindungsgemäße Vorrichtung zur Wirbelstromprüfung gemäß einer ersten Ausführungsform zeigt;
- Fig. 4: eine Ansicht wie Fig. 3 zeigt, wobei jedoch eine zweite Ausführungsform dargestellt ist;
- Fig. 5: eine Ansicht wie Fig. 3 zeigt, wobei jedoch eine dritte Ausführungsform dargestellt ist;
- Fig. 6: schematisch eine mögliche Messanordnung zeigt; und
- Fig. 7: ein Beispiel für die Auswertung von Fehlersignalen mittels Delta-Vektorbildung zeigt.

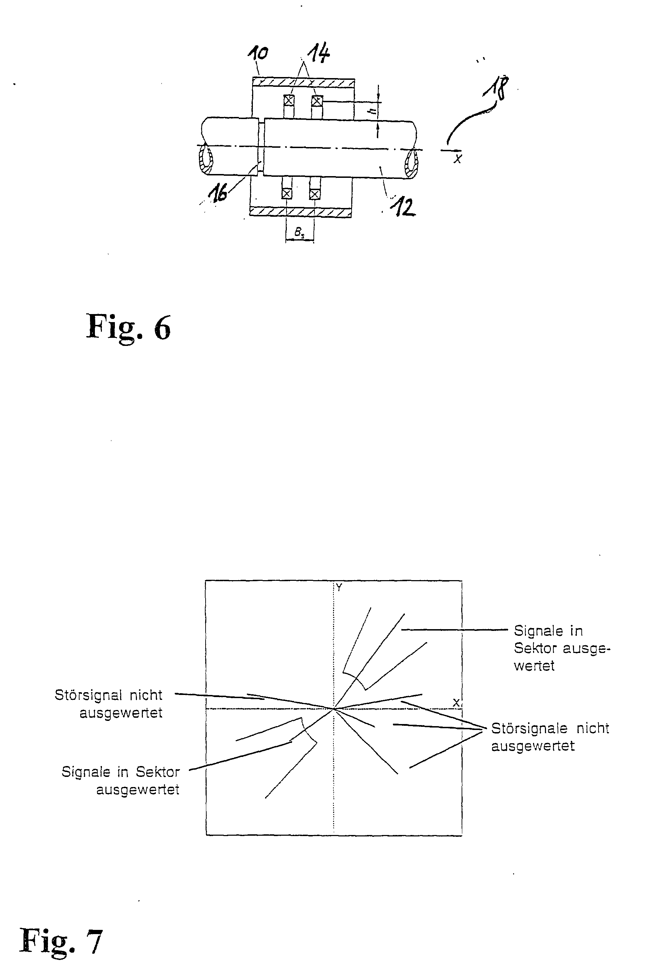

Fig. 6 zeigt schematisch eine mögliche Messanordnung zur Prüfung eines Werkstücks mittels Wirbelströmen, wobei eine Erregerspule 10, die mit einer Wechselspannung einer bestimmten Frequenz beaufschlagt wird, Wirbelströme in einem elektrisch leitenden Rohr 12 induziert, welches von der Erregerspule 12 umgeben wird. Ferner sind zwei Messspulen 14 vorgesehen, welche innerhalb der Erregerspule 10 angeordnet sind und das Rohr 12 ebenfalls umgeben. Die Messspulen 14 sind als Differenzspule geschaltet, so dass nur dann ein Fehlersignal erscheinen kann, wenn die über die Wirbelströme in dem Rohr 12 erzeugten Spannungen an den beiden Spulen 14 unterschiedlich sind. Mit dem Bezugszeichen 16 ist eine Störung an dem Rohr 12 bezeichnet, wobei es sich im gezeigten Fall um eine Ringnut handelt. Das Rohr 12 wird mittels eines Antriebs parallel zu den Spulenachsen in Richtung des Pfeils 18 bewegt.

Die in Fig. 6 dargestellte Messanordnung kann durch eine charakteristische Größe gekennzeichnet werden, die als "Spulenwirkbreite" bezeichnet wird (siehe DIN 54141) und welche von dem Luftspalt h zwischen den Messspulen 14 und dem Außenumfang des Rohrs 12, der Spulenbasis Bₛ, der Erregerfrequenz sowie der elektrischen Leitfähigkeit, dem Durchmesser und der Wanddicke des Rohrs 12 abhängt. Die Spulenwirkbreite kann für eine vorgegebene Messanordnung durch eine Messung am Vergleichsrohr, aus vom Spulenhersteller mitgelieferten Tabellen oder Diagrammen oder anhand von reduzierten Angaben des Spulenherstellers mittels bekannter Näherungsformeln ermittelt werden.

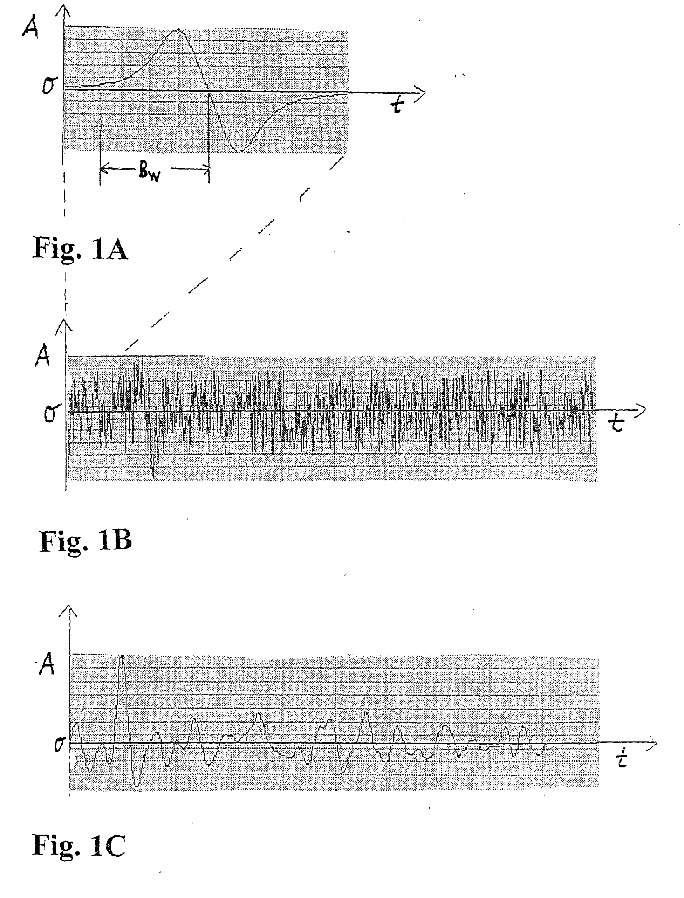

In Fig. 1A ist beispielhaft ein Messsignal gezeigt, welches von einer Differenzspulenanordnung wie der in Fig. 6 gezeigten bei Vorliegen eines im Vergleich zu der Spulenausdehnung kleinen Fehlers erhalten wird. Die für die vorgegebene Messanordnung charakteristische Spulenwirkbreite B_{w} ist in Fig. 1A ebenfalls angedeutet. Bei dem dargestellten Beispiel in Fig. 1A ist die Signalamplitude, d.h. das Differenzsignal zwischen den beiden Messspulen 14, in Abhängigkeit von der Zeit, d.h. der Position des Prüflings, aufgetragen.

Kennt man die Spulenwirkbreite, so ist es möglich, den zeitlichen Verlauf eines Fehlersignals mittels Approximation beispielsweise durch einen einfachen Dirac-Impuls bzw. einen differenzierten Dirac-Impuls theoretisch zu ermitteln. Fig. 1A stellt beispielhaft einen solchen von einem Fehler verursachten zeitlichen Signalverlauf dar, was im folgenden als "Mustersignal" bezeichnet wird.

Alternativ zu der beschriebenen theoretischen Ermittlung des Mustersignals aus der Spulenwirkbreite ist es auch möglich, das Mustersignal direkt aus einer Referenzmessung an einem Prüfling mit definiertem Fehler zu ermitteln. Es versteht sich dabei, dass der Referenzprüfling mit dem tatsächlich untersuchten Prüfling, abgesehen von dem definierten Fehler, identisch sein sollte, was auch für die Messbedingungen, insbesondere Erregerfrequenz und Luftspalt, gilt. Falls jedoch keine identischen Prüfbedingungen hergestellt werden können, kann aus den bekannten Abhängigkeiten der Spulenwirkbreite von den Messparametern bei Kenntnis derselben eine "Umrechnung" des gemessenen Referenzsignals auf die Messbedingungen für den zu untersuchenden Prüfling vorgenommen werden, um das Mustersignal zu ermitteln.

Fig. 1B zeigt beispielhaft ein verrauschtes Messsignal, welches dadurch erzeugt wurde, dass dem Mustersignal von Fig. 1A mittels eines numerischen Rauschgenerators weißes Rauschen überlagert wurde (die Zeitskala ist dabei in Fig. 1A gegenüber Fig. 1B, wie zeichnerisch angedeutet, gedehnt). Es ist ersichtlich, dass mittels herkömmlicher Wirbelstromsignalauswertung das Mustersignal, d.h. das Fehlersignal, nicht zuverlässig erkennbar wäre, da es sich aus dem Rauschen kaum abhebt. Eine zuverlässige Fehlererkennung wäre deshalb für das Messsignal von Fig. 1B mittels herkömmlicher Auswertung nicht möglich.

Fig. 1C zeigt (mit gleicher Zeitskala wie Fig. 1B) die Kreuzkorrelationsfunktion, welche erhalten wurde, indem das Mustersignal aus Fig. 1A einer Kreuzkorrelation mit dem verrauschten Messsignal von Fig. 1B unterzogen wurde. Dabei ist ersichtlich, dass sich in der Kreuzkorrelationsfunktion von Fig. 1C der simulierte Fehler deutlich über das Rauschen abhebt, während dies bei dem eigentlichen Messsignal gemäß Fig. 1B nicht der Fall ist. Die Zuverlässigkeit der Signalauswertung kann somit durch die Kreuzkorrelation des verrauschten Messsignals mit einem für die verwendeten Messbedingungen repräsentativen Fehler Mustersignal deutlich verbessert werden.

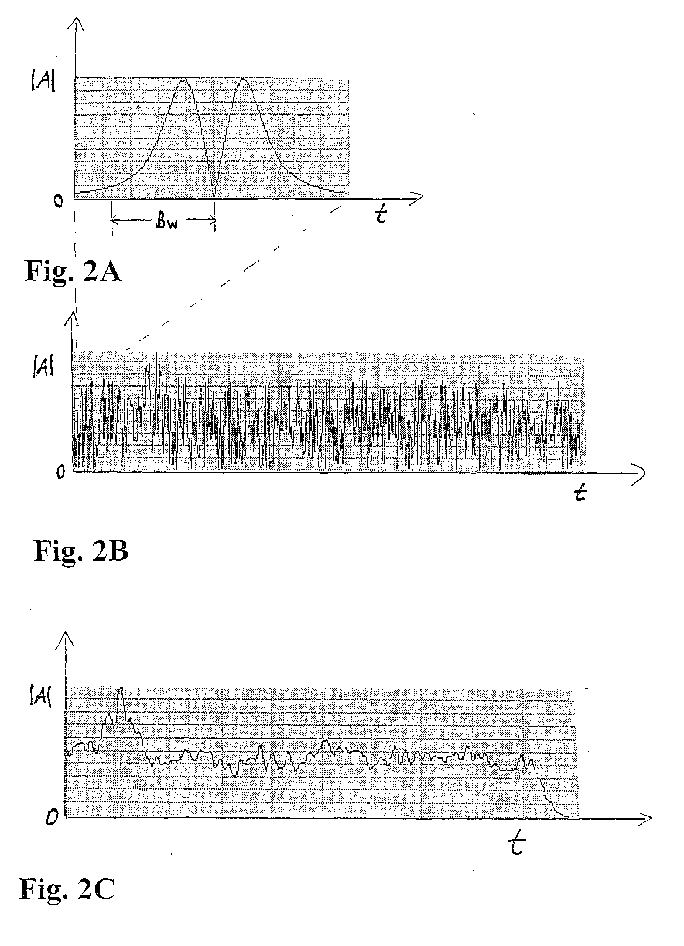

Fig. 2A zeigt den Betrag des Signals von Fig. 1A; Fig. 2B zeigt das mit Quadratur gewichtete Betragsmesssignal von Fig. 1B und Fig. 2C zeigt die entsprechende Kreuzkorrelationsfunktion. Auch hier ist ersichtlich, dass die Kreuzkorrelation mit dem Mustersignal die Zuverlässigkeit der Fehlererkennung ganz erheblich steigern kann. In beiden Fällen ist tendenziell ein Signal/Rauschabstand von 6 dB erzielbar, wobei in beiden Fällen wegen der mangelnden Reproduzierbarkeit eine direkte Auswertung der verrauschten Messsignale nicht sinnvoll wäre, wohl aber eine Auswertung der mit dem Mustersignal korrelierten Messsignale.

Entscheidend ist bei der vorliegenden Erfindung lediglich, dass eine Korrelationsfunktion zwischen dem Messsignal und einem repräsentativen Mustersignal vorgenommen wird und dann statt des Messsignals das korrelierte Signal bzw. die Korrelationsfunktion ausgewertet wird. Wie die Korrelationsfunktion im Detail ermittelt wird, ist von den speziellen Umständen abhängig. So kann grundsätzlich statt der Ermittlung der Kreuzkorrelationsfunktion gemäß Fign. 1 und 2 die Ermittlung einer Korrelationsfunktion beispielsweise mittels Verwendung eines neuronalen Netzes erfolgen. Es ist jegliches Verfahren geeignet, welches in der Lage ist, das Vorhandensein eines vorgegebenen Mustersignals in einem verrauschten Signal zu erkennen bzw. zu quantifizieren.

Grundsätzlich kann die Ermittlung und Auswertung des Muster- bzw. Messsignals statt wie gezeigt im Zeitbereich auch im Frequenzbereich erfolgen.

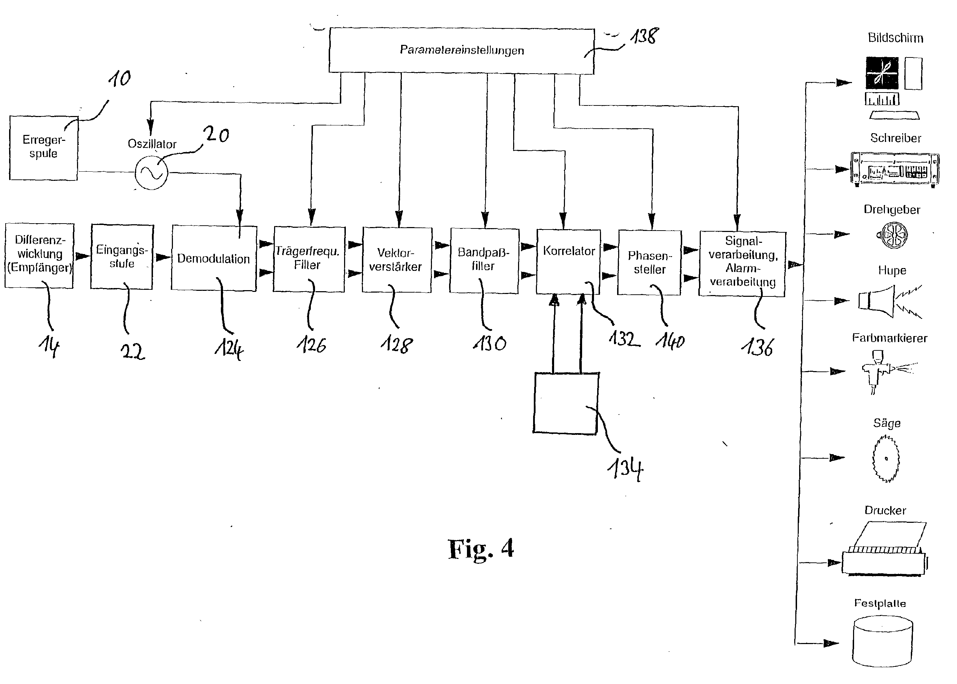

Die Auswertung der ermittelten Korrelationsfunktion kann in üblicher Weise wie die Auswertung des eigentlichen Messsignals bei bekannten Verfahren erfolgen. Es versteht sich, dass die in den Fign. 1 und 2 gezeigten Signale bezüglich der Erregerfrequenz demodulierte Signale darstellen. Grundsätzlich kann dabei eine reine Amplitudendemodulation stattfinden, wie dies bei den in Fig. 2 gezeigten Signalen der Fall ist, d.h. es erfolgt keine phasenselektive Demodulation, oder das Messsignal kann phasensensitiv demoduliert werden, wobei dies dann vorzugsweise zweikanalig mit einer Phasenverschiebung von 90° erfolgt. In diesem Fall wird dann jeder der beiden Kanäle mit einem eigenen Mustersignal korreliert, wobei aus den so gebildeten beiden Korrelationsfunktionen die Auswertung des Fehlersignals bezüglich Amplitude und Phase erfolgt, siehe Fig. 4.

Vorzugsweise erfolgt die Ermittlung und Auswertung der Korrelationsfunktion in Echtzeit. Die Auswertung der Korrelationsfunktion kann grundsätzlich zusätzlich oder alternativ zu der üblichen Auswertung des eigentlichen Messsignals erfolgen. Dabei kann die Auswertung der Korrelationsfunktion auf die Erkennung von Fehlern nahe und unterhalb des Rauschpegels des Messsignals beschränkt werden, während für die Auswertung von Fehlern oberhalb des Rauschpegels die herkömmliche Auswertung des Messsignals verwendet wird. Jedoch kann zu Kontrollzwecken auch eine zusätzliche Auswertung der Korrelationsfunktion bei Fehlem oberhalb des Rauschpegels des Messsignals erfolgen.

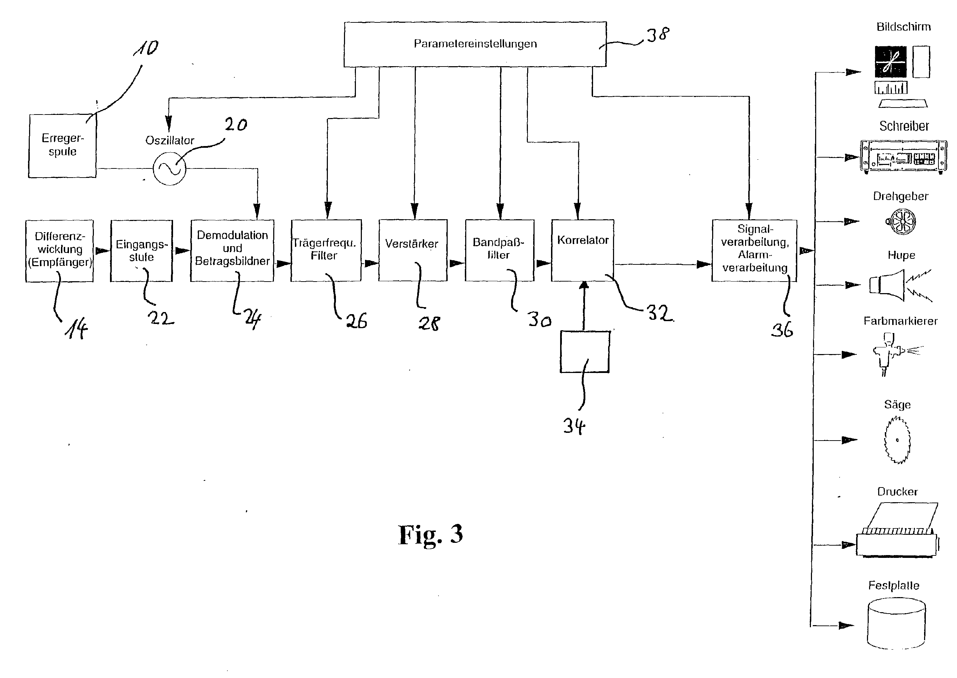

In Fig. 3 ist schematisch der Aufbau und die Arbeitsweise einer Einrichtung zur Materialprüfung mittels Wirbelströmen dargestellt. Die Erregerspule 10 wird von einem Oszillator 20 mit einer Wechselspannung einer gewünschten Frequenz versorgt, um Wirbelströme in einem Prüfling zu induzieren, welche wiederum in der Differenzspulenanordnung 14 eine Spannung induzieren. Das an der Differenzspulenanordnung 14 abgegriffene Spannungssignal wird über eine Eingangsstufe 22 mit einem Vorverstärker, der in Abhängigkeit von der Art des Modulationsverfahrens auch frequenzselektiv sein kann, einer Einheit 24 zugeführt, in welcher eine Demodulation bezüglich der Erregerfrequenz des Oszillators 20 sowie eine Betragsbildung erfolgt. Das demodulierte Betragssignal wird durch ein Filter 26 geleitet, welches Trägerfrequenzanteile aus dem Signal ausfiltert. Das so gefilterte Signal wird mittels eines Verstärkers 28 verstärkt und durch einen vorzugsweise variablen Bandpassfilter 30 geleitet, welches eventuell vorhandene, dem Signal überlagerte Störungen, insbesondere höherfrequente Störungen, ausfiltert. Das so gefilterte Messsignal wird einer Korrelatoreinheit 32 zugeführt, in welcher die Kreuzkorrelationsfunktion zwischen dem Messsignal und einem von einer Einheit 34 bereitgestellten Mustersignal ermittelt wird. Das Mustersignal kann dabei in der oben beschriebenen Weise anhand der Spulenwirkbreite erzeugt werden.

Die in der Korrelatoreinheit 32 erzeugte Korrelationsfunktion wird einer Signalverarbeitungseinheit 36 zugeführt, welche die Korrelationsfunktion auswertet und gegebenenfalls das Vorliegen eines Fehlers ermittelt. Das ausgewertete Signal wird auf einem Bildschirm und einem Schreiber dargestellt und kann ferner auf einem Drucker ausgegeben und in einem Speichermedium gespeichert werden. Falls die Signalverarbeitungseinheit 36 auf Vorliegen eines Fehlers entscheidet, wird ein akustischer und/oder optischer Alarm ausgelöst, wobei die fehlerhafte Stelle des Prüflings mit einer Farbmarkierung oder einer Einkerbung versehen wird.

Ein Drehgeber kann vorgesehen sein, um die tatsächliche Liniengeschwindigkeit der Linie, d.h. die Geschwindigkeit des Prüflings, zu ermitteln, so dass z.B. eine ortsgenaue Markierung des Prüflings ermöglich wird, dessen Länge ins Protokoll aufgenommen werden kann und Filter mit Frequenzen in Abhängigkeit von der Liniengeschwindigkeit verändert werden können.

Der Oszillator 30, der Verstärker 28, die Korrelatoreinheit 32, die Signalverarbeitungseeinheit 36 sowie die Filter 26 und 30 werden von einer Steuereinheit 38 gesteuert.

Da im vorliegenden Fall eine Betragsbildung des Messsignals, und entsprechend auch eine Betragsbildung des Mustersignals, erfolgt, kann nur die Signalamplitude ohne Phaseninformation bei der Fehlererkennung ausgewertet werden.

Fig. 4 zeigt eine zu Fig. 3 ähnliche Wirbelstromprüfeinrichtung, bei welcher jedoch nicht die Betragssignale, sondern die Komponentensignale ermittelt und ausgewertet werden, so dass in diesem Fall die Phaseninformation des Messsignals bei der Fehlererkennung mit berücksichtigt werden kann. In der Demodulationseinheit 124 findet keine Betragsbildung statt, sondern es wird vielmehr eine phasensensitive, zweikanalige Demodulation mit einer Phasenverschiebung von 90° zwischen den beiden Kanälen durchgeführt (z.B. mittels phasengesteuerten Gleichrichtern), d.h. es findet eine phasensynchrone Demodulation des Messsignal mit Sinus und Kosinus des Erregersignals statt. Diese zweikanalige Demodulation in Komponentensignale macht es erforderlich, dass der Signalpfad zwischen der Demodulationseinheit 124 und der Signalverarbeitungseinheit 136 zweikanalig ausgebildet ist. Infolgedessen sind das Trägerfrequenzfilter 126, der Verstärker 128 (der in diesem Fall als Vektorverstärker ausgebildet ist) sowie das Bandpassfilter 130 zweikanalig ausgebildet. Auch der Korrelator 132 ist zweikanalig ausgebildet, wobei für jeden Messsignalkanal, d.h. sowohl für die Sinuskomponente als auch die Kosinuskomponente, eine eigene Korrelationsfunktion ermittelt wird. Dabei wird für jeden Kanal von der Einheit 134 ein eigenes Mustersignal bereitgestellt. Die ermittelten Korrelationsfunktionen durchlaufen einen Phasensteller 140, der es erlaubt, die Phasenlage des Fehlersignals in einer für die Auswertung günstigen Weise einzustellen, bevor sie der Signalverarbeitungseinheit 136 zugeführt werden, welche in an sich bekannter Weise die Amplitude und die Phasenlage des Fehlersignals aus den beiden ermittelten Korrelationsfunktionen ermittelt. Als Ergebnis erhält man für jedes potentielle Fehlersignal dann ein Fehlersignal, dessen Länge die Signalamplitude und dessen Richtung die Phasenlage des Fehlersignals angibt, wodurch eine Darstellung des Fehlers in der komplexen Impedanzebene der Differenzspule 14 auf dem Bildschirm dargestellt werden kann.

Bezüglich der Signalauswertung ist anzumerken, dass diese bei der reinen Amplitudenauswertung gemäß Fig. 3 zweckmäßigerweise durch Vorgabe bestimmter Schwellwerte erfolgt, so dass beispielsweise Signale mit zu kleiner oder zu großer Amplitude nicht als Fehler identifiziert werden. Bei der phasensensitiven Komponentensignalauswertung gemäß Fig. 4 können zusätzlich zu solchen Amplitudenschwellwerten auch Phasenschwellwerte vorgegeben werden, innerhalb welcher ein Signal liegen muss, um als Fehler identifiziert zu werden. In diesem Fall erhält man bestimmte Sektoren, innerhalb welcher der ermittelte Fehlervektor liegen muss. Dies ist in Fig. 7 angedeutet. Die Darstellung der Signale als Vektoren in der komplexen Impedanzebene ist dabei besonders übersichtlich und in so fern zweckmäßig. Die Fehlervektoren (die auch als Delta-Vektoren bezeichnet werden) werden als der Vektor zwischen den Extremwerten der phasenabhängigen Amplitude berechnet.

Zwar ist bei der phasensensitiven Auswertung gemäß Fig. 4 der Aufwand für die Korrelationsermittlung in etwa doppelt so groß wie bei der reinen Betragsauswertung gemäß Fig. 3, jedoch ist durch die zusätzlich erhaltene Phaseninformation eine komplexere Bewertung der Fehlersignale möglich, was auch für eine Differenzierung unterschiedlicher Fehlertypen wichtig sein kann. Es ist anzumerken, dass die Korrelatoreinheit 132 bei positiver Korrelation nur positive Signale liefert, so dass - ohne Phasendrehung - Sektorenauswertungen nur im ersten Quadranten der komplexen Ebene sinnvoll sind.

Grundsätzlich ist es auch möglich, bei der Signalauswertung an Stelle von "scharfen" Schwellen eine Auswertung mittels Fuzzylogik vorzunehmen.

Ferner ist es auch möglich, wie bereits oben erwähnt, vor der Korrelation des Messsignals mit dem Mustersignal eine Transformation in den Frequenzbereich bzw. in die Frequenzebene vorzunehmen, d.h. es wird dann bei der Korrelation nach typischen Frequenzverläufen im Messsignal gesucht.

Die für die Signalkorrelation erforderliche Rechenkapazität kann auch zusätzlich genutzt werden, um eine eventuelle Periodizität der aufgefundenen Fehlertypen festzustellen, was unter Umständen nützliche Rückschlüsse auf beispielsweise qualitative Defizite von Rollen, insbesondere bei bestimmten Rollen, bei der Herstellung des Prüflings und damit auf die eigentliche Fehlerursache innerhalb bzw. außerhalb der Produktionslinie zulässt.

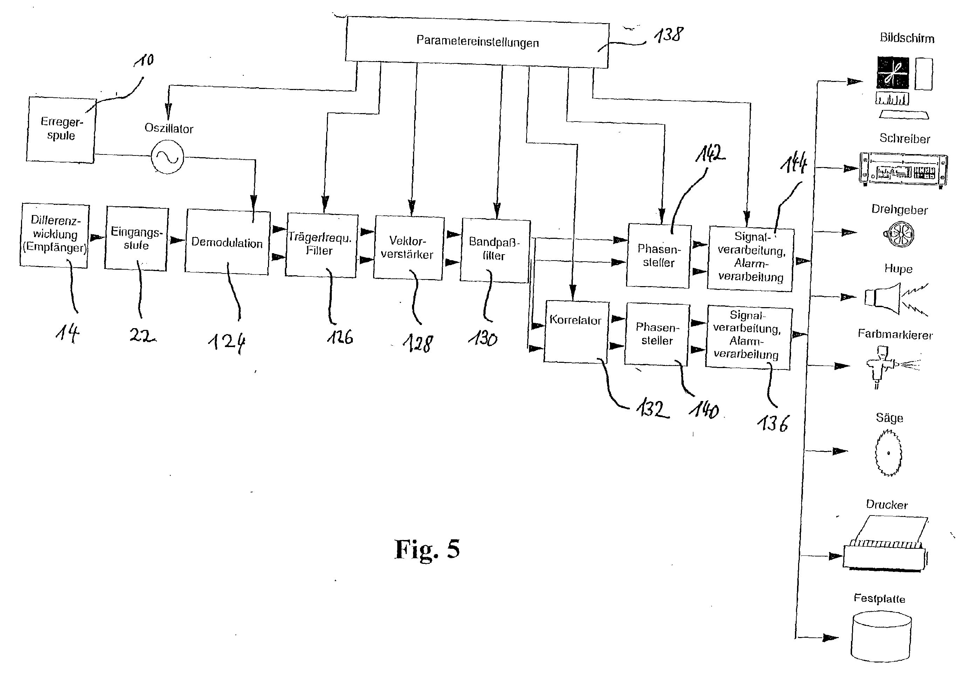

Fig. 5 zeigt eine ähnliche phasensensitive Wirbelstromprüfeinrichtung wie Fig. 4, wobei jedoch zusätzlich zu der Auswertung des mit dem Mustersignal korrelierten Signal eine direkte Auswertung der beiden der Korrelationsheit 132 zugeführten Kanäle mit dem demodulierten, verstärkten und gefilterten Messsignal erfolgt. Zu diesem Zweck werden die beiden Messsignalkanäle nach dem Bandpassfilter 130 nicht nur der Korrelationseinheit 132, sondern auch einem zweiten Phasensteller 142 und nach Durchlaufen desselben einer zweiten Signalverarbeitungseinheit 144 zugeführt. Die Signalauswertung erfolgt somit insgesamt vierkanalig. Diese parallele Auswertung des eigentlichen Messsignals sowie des mit dem Mustersignal korrelierten Messsignals ermöglicht zumindest für Fehlersignale, die oberhalb des Rauschpegels liegen, eine möglichst vollständige Ausnutzung der Signalinformation. Im Bereich des Rauschpegels oder darunter wird jedoch in der Regel nur die Auswertung des mit dem Mustersignal korrelierten Messsignals sinnvoll sein. Auf diese Weise können sich die herkömmliche direkte Auswertung des Messsignals und die erfindungsgemäße Auswertung des mit einem Mustersignal korrelierten Messsignals ergänzen, um eine möglichst zuverlässige und reproduzierbare Ermittlung auch relativ signalschwacher Fehler zu ermöglichen.

## Patentansprüche

1. Verfahren zur Prüfung eines Werkstücks (12) mittels Wirbelströmen, die von einer Erregerspule (10) in dem Werkstück induziert werden und aus denen mittels eines Messsensors (14) ein Messsignal gewonnen wird, wobei
ein für einen Werkstückfehler repräsentatives Mustersignal erzeugt wird,
eine Korrelationsfunktion des von dem Sensor erfassten Messsignals mit dem Mustersignal ermittelt wird, und
die Korrelationsfunktion ausgewertet wird, um einen Fehler in dem Werkstück zu erkennen.

2. Verfahren nach Anspruch 1, **dadurch gekennzeichnet, dass** das Mustersignal dadurch ermittelt wird, dass ein Kennwert ermittelt wird, welcher den Sensor (14) in Abhängigkeit von den die Messung beschreibenden Parametern charakterisiert, und das Mustersignal für den Werkstückfehler in Abhängigkeit von dem Kennwert anhand eines Modells berechnet wird.

3. Verfahren nach Anspruch 2, **dadurch gekennzeichnet, dass** das Mustersignal durch Approximation mittels eines einfachen oder differenzierten Dirac-Impulses ermittelt wird.

4. Verfahren nach Anspruch 1, **dadurch gekennzeichnet, dass** das Mustersignal mittels einer Referenzmessung an einem Werkstück mit definiertem Fehler ermittelt wird.

5. Verfahren nach einem der vorhergehenden Ansprüche, **dadurch gekennzeichnet, dass** es sich bei dem Sensor (14) um eine Differenzspulenanordnung oder Absolutspulenanordnung und bei dem Kennwert um die Spulenwirkbreite handelt.

6. Verfahren nach einem der vorhergehenden Ansprüche, **dadurch gekennzeichnet, dass** es sich bei der Korrelationsfunktion um eine Kreuzkorrelationsfunktion handelt.

7. Verfahren nach Anspruch 1 bis 5, **dadurch gekennzeichnet, dass** die Ermittlung der Korrelationsfunktion mittels eines neuronalen Netzes erfolgt.

8. Verfahren nach einem der vorhergehenden Ansprüche, **dadurch gekennzeichnet, dass** das Mustersignal und das Messsignal im Zeitbereich ermittelt und korreliert werden.

9. Verfahren nach Anspruch 1 bis 7, **dadurch gekennzeichnet, dass** das Mustersignal und das Messsignal im Frequenzbereich ermittelt und korreliert werden.

10. Verfahren nach einem der vorhergehenden Ansprüche, **dadurch gekennzeichnet, dass** das Mustersignal und das Messsignal als Betragssignale ohne Phaseninformation ermittelt und korreliert werden.

11. Verfahren nach Anspruch 1 bis 9, **dadurch gekennzeichnet, dass** das Mustersignal und das Messsignal als Komponentensignale mit Phaseninformation ermittelt und korreliert werden.

12. Verfahren nach einem der vorhergehenden Ansprüche, **dadurch gekennzeichnet, dass** das Messsignal vor der Korrelationsbildung demoduliert wird.

13. Verfahren nach Anspruch einem der vorhergehenden Ansprüche, **dadurch gekennzeichnet, dass** vor der Ermittlung der Korrelationsfunktion eine Gewichtung des Messsignals vorgenommen wird.

14. Verfahren nach Anspruch 13, **dadurch gekennzeichnet, dass** eine quadratische Gewichtung vorgenommen wird.

15. Verfahren nach einem der vorhergehenden Ansprüche, **dadurch gekennzeichnet, dass** zusätzlich zu der Korrelationsfunktion auch das Messsignal selbst für die Fehlererkennung in dem Werkstück ausgewertet wird.

16. Verfahren nach Anspruch 15, **dadurch gekennzeichnet, dass** die Korrelationsfunktion nur für die Erkennung von Fehlern nahe und unterhalb des Rauschpegels des Messsignals verwendet wird.

17. Verfahren nach einem der vorhergehenden Ansprüche, **dadurch gekennzeichnet, dass** die Korrelationsfunktion für die Erkennung von Fehlern oberhalb des Rauschpegels des Messsignals verwendet wird.

18. Verfahren nach einem der vorhergehenden Ansprüche, **dadurch gekennzeichnet, dass** das Werkstück kontinuierlich an dem Sensor vorbeibewegt wird und die Ermittlung und Auswertung der Korrelationsfunktion in Echtzeit erfolgt.

19. Verfahren nach Anspruch 11, **dadurch gekennzeichnet, dass** das Messsignal phasensensitiv zweikanalig mit einer Verschiebung von 90 Grad demoduliert wird und jeder der beiden Kanäle jeweils mit einer eigenen Musterfunktion korreliert wird, wobei aus den so gebildeten Korrelationsfunktionen die Amplitude und Phase des Fehlersignals ermittelt wird.

20. Verfahren nach Anspruch 19, **dadurch gekennzeichnet, dass** die Auswertung des Fehlersignals durch die Bildung von Phasenschwellwerten und Amplitudenschwellwerten erfolgt.

21. Verfahren nach Anspruch 20, **dadurch gekennzeichnet, dass** die Amplitude und Phase des Fehlersignals als Vektor dargestellt werden.

22. Verfahren nach Anspruch 20 oder 21, **dadurch gekennzeichnet, dass** die Auswertung anstellte der Verwendung von scharfen Schwellwerten für Phase und Amplitude mittels Fuzzylogik erfolgt.

23. Vorrichtung zur Prüfung eines Werkstücks (12) mittels Wirbelströmen, mit einer Erregerspule (10) zum Induzieren von Wirbelströmen in dem Werkstück, einem Messsensor (14) zum Gewinnen eines Messsignals aus den in dem Werkstück induzierten Wirbelströmen, einer Einrichtung (34, 134) zum Erzeugen eines für einen Werkstückfehler repräsentativen Mustersignals, einer Korrelatoreinheit (32, 132) zum Ermitteln einer Korrelationsfunktion des von dem Sensor erfassten Messsignals mit dem Mustersignal, und einer Einheit (36, 136) zum Auswerten der Korrelationsfunktion, um einen Fehler in dem Werkstück zu erkennen.
